Europäisches Patentamt

European Patent Office

Office européen des brevets

(11) Publication number: **0 182 463 B1**

# EUROPEAN PATENT SPECIFICATION

(45) Date of publication of patent specification: **16.10.91**  (51) Int. Cl.⁵: **B32B 27/32**

(21) Application number: **85306343.6**

(22) Date of filing: **06.09.85**

(54) Heat-sealable multi-layer polypropylene film structure.

(30) Priority: **14.11.84 US 671376**

(43) Date of publication of application:
**28.05.86 Bulletin 86/22**

(45) Publication of the grant of the patent:
**16.10.91 Bulletin 91/42**

(84) Designated Contracting States:
**AT BE CH DE FR GB IT LI LU NL SE**

(56) References cited:
**EP-A- 0 175 259**
**DE-A- 2 941 909**
**US-A- 419 411**

(73) Proprietor: **MOBIL OIL CORPORATION**
**150 East 42nd Street**
**New York New York 10017(US)**

(72) Inventor: **Park, Hee Chung**
**3 Charing Cross**
**Fairport New York, 14450(US)**
Inventor: **Nahmias, Alan Michael**
**30 Steele Road**
**Victor New York 14564(US)**

(74) Representative: **Cooper, John Anthony**
**Mobil Court 3 Clements Inn**
**London WC2A 2EB(GB)**

## Description

This invention relates to a multi-layer heat-sealable polypropylene film structure having low film to film coefficient of friction over a wide temperature range.

Polypropylene film is an excellent packaging material, but it has a high film-to-film coefficient of friction which makes it difficult to utilize in automatic packaging equipment. Moreover, when polypropylene film is used to wrap a package, such as a cigarette package, and the wrapped film is heat sealed to secure the package, there is a particular tendency for film-to-film sticking if adjacent heat seal regions contact shortly after sealing. Both of these problems present particular difficulty in automatic cigarette packaging machines, since present day machines run at from 300-400 packs per minute, which is equivalent to approximately 49m (160 ft.) of film per minute. This speed makes it very critical that the coefficient of friction of the film is very low, even after heat sealing of the film.

Certain innovations have improved the surface friction characteristics of polypropylene film. For example, U.S. Patent No. 3,176,021 discloses the inclusion of minor quantities of fatty acid amides into polypropylene film. However, in order to obtain the benefits taught by this patent, certain limitations must be observed. Thus, the film must be formed from a melt, extruded at a temperature between about 204 to 288°C (400°F-550°F). In addition, the amide must be present in from 0.005 to 2.0 weight percent of the polypropylene and together with from 0.1 to 4.0 weight percent polyethylene. Under these conditions and limitations the resulting polypropylene film will have a static coefficient of friction no higher than 0.6, but this is significantly higher than the 0.25 maximum needed for successful operation in modern high speed packaging machines. Further, it has been found that once the film has been subjected to the high temperatures used to effect heat sealing, the coefficient of friction increases significantly.

U.S. Patent No. 3,399,156 discloses that the inclusion of the combination of silicone oil and finely divided silica into a polypropylene film produces a film which will have a coefficient of friction of from 0.45 to 0.46 and be suitable for use in bread-wrapping machines.

It has been found that to a certain extent high cystallinity in polypropylene impedes facile migration of additives to the surface of such a polymer in film form. This problem is addressed in U.S. Patent No. 4,419,410, which teaches the coextrusion of a skin layer of polypropylene of comparatively low stereoregularity with a core layer of polypropylene of high stereorgularity. By including in the core layer a surface modifying agent such as an amide of a fatty acid, it is found that the amide blooms to the surface of the comparatively low stereoregularity polymer to lower the coefficient of friction of the film.

In spite of these teachings, it remained until U.S. Patent No. 4,419,411 to significantly advance the art of making multi-layer polypropylene films suitable for most packaging operations. This patent teaches a multi-layer polypropylene film structure having surface modifying agents comprising finely divided silica, silicone oil and an amide of a water insoluble mono-carboxylic acid having from about 8 to about 24 carbon atoms on a surface thereof. Notwithstanding the general excellence of this film, it is found that when used in high speed cigarette pack wrapping machines, there is a tendency for the film surfaces of contacting packages to stick together, particularly in the areas where heat sealing has occurred.

U.S. Patent No. 4,348,457 discloses a sealable multi-layer film for packaging comprising a polypropylene film and at least one sealing layer of an ethylene home - or copolymer wherein the sealing layer contains an additive combination of a long chain amine, a thermoplastic polymer incompatible with the sealing polymers and a polydialkyl siloxane.

EPA 0 175 259 discloses a biaxially stretch-oriented transfer metalisation film based on polypropylene. The film is a three-layered film produced by coextrusion, comprising a base layer of propylene homopolymers and skin layers arranged on both sides thereof. The base layer contains an additive depot of migrating monomers in an amount from 0.01 to 2.0% by weight based on the weight of the polymers forming the base layer. The skin layers consist of polypropylene having a viscosity lower than that of the polypropylene of the base layer.

Accordingly, the present invention is directed to an oriented multi-layer film structure comprising coextruded layers of:

(a) a base layer comprising polypropylene of relatively high stereo-regularity and from 0.05-0.2% of a $C_{12}$ to $C_{18}$ aliphatic tertiary amine by weight of the base layer; and

(b) a heat-sealable skin layer comprising a polyolefin of relatively low stereo-regularity on at least one surface of (a), said skin layer containing a combination of finely divided silica, and a silicone oil, said skin layer being of a thickness less than 0.8 μm and the surface of the skin layer having thereon at least some of said amine which has migrated from the base layer (a).

In the multi-layer film structure of the invention, the base layer is an oriented highly crystalline or highly stereoregular polypropylene film which preferably has the following properties:

a melt flow rate at 230° C (446° F.) ranging from 1 to 25, preferably 2 to 4, a crystalline melting point is of 161-163° C (321-325° F.), a number average molecular weight from 25,000 to 100,000, and a density from 0.90 to 0.91.

Included in the base layer, is a long chain aliphatic tertiary amine, for example of the general formula $R_3N$, wherein one of the R groups is a fatty acid residue or its $C_{12}$-$C_{18}$ alkyl equivalent and the others are hydroxy $C_1$-$C_4$ alkyl groups. An example of such a compound is N,N-bis(2-hydroxyethyl) tallow amine, wherein the tallow group is believed to include a mixture of $C_{14}$-$C_{18}$ alkyl groups. The long chain alkyl groups can also be obtained as mixtures from, for example, coconut oil, fatty acids, and the like. The low molecular weight hydroxy alkyl group can be hydroxyethyl, hydroxypropyl and hydroxybutyl.

The amine can be dry blended together with the polypropylene resin and then melt mixed. Alternatively, the amine can be incorporated into a minor portion of the polypropylene as a master batch to form a high concentration mix of the amine and the polypropylene. This may then be diluted to the appropriate proportion by the addition of more polypropylene. Although some of these amines are known anti-static agents, they are employed herein in order to reduce the coefficient of friction of the final film structure and to inhibit package to package sticking. While the amine is added to the base layer resin, when the resin is coextruded with a skin polymer some portion of the amine enters into and moves to the surface of the skin layer. Thus, by this mechanism the amine is available at the surface of the skin layer or layers so as to beneficially affect, in combination with the silica and siloxane, the coefficient of friction and anti-stick characteristics of the multi-layer film.

The relatively low stereoregular polyolefin polymers which can be used as the skin materials of the multi-layer film include, for example, random co-polymers of ethylene and propylene and ethylene-propylene-butene-1 terpolymers. The terpolymer preferably contains 3-6 wt % ethylene and 4-5 wt % butene-1. However, particularly preferred skin layer polymers are ethylene-propylene copolymers which contain from 2 to 8 (for example 7) wt.% and, more preferably, from 3 to 5 wt.% ethylene and which have a melt flow rate at 230° C (446° F.) from 2 to 15, preferably 3 to 8, a crystalline melting point of 125 to 150° C (257°. to 302° F.), a number average molecular weight from 25,000 to 100,000, and a density from 0.89 to 0.90. These copolymers have excellent heat seal characteristics, moisture barrier, stiffness, high strength, good optical properties, but do not possess the excellent physical characteristics inherent in the polypropylene layer. Moreover, in order to take advantage of its excellent heat seal characteristics, the skin layer must be modified so as to improve its coefficient of friction and non-stick properties, particularly after being exposed to heat-seal temperatures.

The present invention is based upon the discovery that the combination of the three surface modifying agents, i.e. the silica, the silicone oil, and the amine by virtue of its transport and blooming onto the surface of the skin layer, produces unexpected improvement in the coefficient of friction and anti-stick properties of the film structure provided the thickness of the skin layer(s) is less than 0.8 μm These improvements are retained when the film is used in high speed machines and the film undergoes heat-sealing.

The silica employed can be any commercially available finely divided silica, preferably that having a mean particle size ranging from 0.5 to 5 μm The silica can be present from 0.05 to 0.5 wt.%, preferably 0.1 to 0.3 wt.% of the skin layer.

The silicone oil, which preferably is a poly-dimethylsiloxane, conveniently has a viscosity of 20,000 to 3,000,000, preferably 20,000 to 30,000$mm^2/_s$ This siloxane can be present from 0.3 to 0.8 wt. % of the skin layer.

An optional and preferred modifying agent for use herein is an amide of a water-insoluble monocarboxylic acid having 8 to 24 carbon atoms and mixtures of said amides. Specific examples of this class of amides are erucamide, oleamide, stearamide and behenamide. It is preferred that this additive be included in the highly stereoregular polypropylene base layer in an amount of 300 to 400 parts per million of the base layer and/or in the skin layer in an amount up to 2,000 ppm. It is to be understood that the amide slip agent may be provided in the comparatively low stereoregular copolymer skin layer of the finished film by dispersing the amide in the resin precursor of the comparatively high stereoregular polypropylene alone, the amide then exuding from the base or core film through the copolymer film to its surface. Thus, amide additive in the outer film resin starting material is not necessary, but may be desired.

By using the above surface modifying additives, it is possible to produce a multi-layer film structure in which the coefficient of friction of the surface of the or each skin layer is about 0.25 and is maintained at less than 0.8 wt. % to about 132° C (270° F). To further aid the heat seal characteristics and improve the optical properties of the film, the skin layer can also contain up to 10 wt.% of a natural or synthetic terpene resin, a wax, or a low molecular weight (e.g. 10,000) polyethylene.

The overall thickness of the contemplated multi-layer structure is primarily composed of the highly stereoregular polypropylene base layer. The coextruded layer of comparatively low stereoregularity may be present on one or both surfaces of the base layer. It is preferred that the skin layer be on both sides of the base layer and it is critical that the thickness of each skin layer be less than 0.8 μm So long as the continuity of the film is maintained, the minimum thickness of the skin layer is not important, although in practice the skin layer will preferably have a thickness of at least 0.3 μm.

The multi-layer films of the present invention can be prepared employing commercially available systems for coextruding resins. The polypropylene homopolymer of comparatively high stereoregularity containing the tertiary amine and, if desired the amide slip agent, can be coextruded with an ethylene-propylene random copolymer of comparatively low stereoregularity containing the appropriate percentage of the combination of silica and dimethylsiloxane. The polymers can be brought to the molten state and coextruded from a conventional extruder through a flat sheet die, the melt streams being combined in an adapter prior to being extruded from the die. After leaving the die orifice, the multi-layer film structure is chilled and the quenched sheet then conveniently reheated and stretched, e.g., 4 to 6 times in the machine direction (MD), and subsequently, for example, 4 to 10 times in the transverse direction (TD). The edges of the film can be trimmed and the film wound onto a core. It is preferred, particularly where the film contains an amide slip agent, that the thus formed structure be conditioned or equilibrated by holding the same for a period of about 6 hours to 1 week at a temperature of 27 to 52°C. (80 to 125°F.), preferably for 6 to 72 hrs. at 38-52°C (100-125°F). This film will have on the surface thereof a combination of the four additives: amine, amide, silica and silicone oil. The resulting film will have a coefficient of friction of 0.25 or lower and will not block under conditions of tight winding after being held at temperatures up to 60°C (140°F).

Some commercially available core polymers, skin polymers and incompatible polymers and their at least approximate melting points are tabulated below:

## TABLE

| Polymeric Material | Melting Point | |
|---|---|---|
| Homopolypropylene | 161-163°C | (321°-325°F) |
| ARCO W756 (ethylene-propylene random copolymer 3.3-3.6 wt.% ethylene) | 140°C | (273°F) |
| ARCO 827 (ethylene-propylene random copolymer 4-8 wt.% ethylene) | 124°C | (255°F) |
| Chisso XF 7500 (ethylene-propylene-butene-1 terpolymer, 3.5 wt.% ethylene, 4.5 wt.% butene-1) | 130°C | (266°F) |
| Chisso XF 7700 (ethylene-propylene-butene-1 terpolymer, 5 wt.% ethylene, 4.5 wt.% butene-1) | 121°C | (250°F) |
| Solvay KS 400 (ethylene-propylene random copolymer) | 132°C | (270°F) |
| Solvay KS 409 (ethylene-propylene random copolymer 3.4-4.0 wt.% ethylene) | 132°C | (270°F) |
| Sumitomo FL 6711 (ethylene-propylene random copolymer, 4-6% ethylene) | 124°C | (255°F) |

The invention will now be described with reference to the following examples, in which the films are tested by feeding a roll of film into a Scandia Model 712 Cigarette Pack Wrapping system with the capability of wrapping up to 200 packs of cigarettes per minute. During transport through the system each pack is subjected to three heat seal regions which can cause package to package sticking. The film must

4

maintain a coefficient of friction room temperature of between about 0.2-0.3 in order to avoid unacceptable drag which would lead to pack jamming and machine down-time. Success of the operation depends on the virtual absence of pack-to-pack sticking, a moderate to low force necessary to move the packs through the system and a seal range of at least 11°C (20°F), preferably 17-22°C (30°-40°F), on all seal surfaces.

EXAMPLES

Example 1

A polypropylene homopolymer of comparatively high stereoregularity, i.e. Novamont 243.4A, containing about 1,000 ppm of N,N-bis(2-hydroxyethyl) tallow amine is melt coextruded and biaxally oriented with skin layers of Solvay KS 409, an ethylene-propylene copolymer having from about 3.4-4.0 wt.% ethylene, said copolymer containing 6,000 ppm of a poly-dimethylsiloxane, having a viscosity of 30,000 centistokes and 2,000 pm silica of a mean particle size of about 1-2 $\mu$m The resulting film has an overall thickness of 21 $\mu$m with the core layer being 19.8 $\mu$m and the skin layers being 0.6 $\mu$m each. Utilizing the above-described multilayer film, cigarette packages can be wrapped using the above-described apparatus at a rate of approximately 172 packs per minute. This wrapping was successfully accomplished with a virtual absence of package-to-package sticking, and with a moderate to low force being necessary to move the packages through the machine system. The permissible temperature range for all seal surfaces was at least 20°C.

Example 2

Example 1 was repeated except the base polypropylene homopolymer was Novamont 243.4 which did not contain any amine.
This film when employed in the same cigarette package wrapping system described above showed an increase in drag force through the system of approximately 30%.

Example 3

Example 1 was repeated except that the silica was excluded. Employing the resulting film in the same cigarette wrapping system resulted in jamming of the system in less than one minute due to package to package sticking and increased drag.

Example 4

Example 1 was repeated except that the poly-dimethylsiloxane was excluded. Employing the resulting film in the same cigarette wrapping system again caused the system to jam in less than one minute due to package to package sticking and increased drag.

Example 5

Example 1 was repeated except the thickness of the skin layer was 0.9 $\mu$m each.
This film when employed in the same cigarette package wrapping system described above showed excessive drag sufficient to cause jamming within a few seconds.

Example 6

The amine-containing polypropylene homopolymer of comparatively high stereoregularity, i. e. Novamont 243.4A, was melt coextruded and biaxially oriented with skin layers of Chisso 7500, a terpolymer of ethylene-propylene-butene-1, said terpolymer containing approximately 800 parts per million of erucamide, 6,000 parts per million of a dimethylpolysiloxane, having a viscosity of 30,000 mm$^2$/s and 2,000 parts per million silica of mean particle size of from about 1-2 $\mu$m The resulting film had an overall thickness of 21 $\mu$m with the core layer being 19.8 $\mu$m and the skin layers 0.5 $\mu$m each. Utilizing the above-described multilayer film, cigarette packages, could be wrapped using the above-described apparatus at a rate of approximately 172 packs per minute. This wrapping was successfully accomplished with a virtual absence of package-to-package sticking, with a moderate to low force being necessary to move the packages through the machine. Again, a heat seal range of at least 20°C was permissible on all seal surfaces.

Example 7

Example 6 was repeated except the amine was omitted from the polypropylene base layer. Again, the film exhibited an increased drag of about 30% when used in the wrapping apparatus.

Example 8

Example 6 was repeated on two film samples except that in one sample the silica was omitted from the skin layer and in the other sample the silicone oil was omitted. Employing each of the resulting films in the same cigarette package wrapping system described above resulted in jamming of the system in less than one minute due to package to package sticking and increased drag.

Example 9

Example 6 was repeated except that the thickness of the skin layers was increased to 0.9 μm Employing the resulting film in the same cigarette wrapping system as described above, resulting in the system jamming within a few seconds due to package to package sticking and increased drag.

Example 10

Example 6 was repeated except Chisso XF7700 was employed instead of Chisso XF7500 and the skin layers contained 8000 ppm of poly-dimethylsiloxane. The same degree of wrapping success was experienced as in Example 6.

**Claims**

1. An oriented multi-layer film structure comprising coextruded layers of:
   (a) a base layer comprising polypropylene of relatively high stereoregularity and 0.05-0.2 % of a $C_{12}$ to $C_{18}$ aliphatic tertiary amine by weight of the base layer; and
   (b) a heat-sealable skin layer comprising a polyolefin of relatively low stereoregularity on at least one surface of (a), said skin layer containing a combination of finely divided silica and a silicone oil and said skin layer having a thickness less than 0.8 μm.

2. The structure of claim 1 wherein said amine is of the general formula $R_3N$, with one of the R groups being $C_{12}$-$C_{18}$ alkyl group and the others being hydroxy $C_1$-$C_4$ alkyl groups.

3. The structure of claim 1 or claim 2 wherein said polyolefin is either a random copolymer of propylene with ethylene or a terpolymer of propylene with ethylene and butene-1.

4. The structure of claim 3 wherein said copolymer of propylene with ethylene contains from 2 to 8 wt.% ethylene.

5. The structure of claim 3 wherein said terpolymer of propylene with ethylene and butene-1 contains from 3-6 wt.% ethylene and 4-5 wt.% butene-1.

6. The structure of any preceding claim wherein said silica has a mean particle size of from 0.5 to 5 μm and is present in from 0.05 to 0.5 wt.% of said skin layer.

7. The structure of any preceding claim wherein said silicone oil is poly-dimethylsiloxane having a viscosity of 20,000 to 3,000,000 $mm^2/s$ and is present in from 0.3 to 0.8 wt.% of said skin layer.

8. The structure of any preceding claim also containing an amide of a water-insoluble monocarboxylic acid having from 8 to 24 carbon atoms wherein said amide is present in the precursor resin of said base layer in from 300 to 400 ppm and in said skin layer in up to 2000 ppm.

**Revendications**

1. Un film de structure multi-couches orienté comprenant des couches co-extrudées constituées:

6

(a) d'une couche de base comprenant du polypropylène présentant une stéréorégularité relativement élevée et 0,05 à 0,2% en poids, par rapport à la couche de base, d'une amine tertiaire aliphatique en $C_{12}$ à $C_{18}$; et

(b) d'une couche externe, thermosoudable, comprenant une polyoléfine à stéréorégularité relativement faible sur au moins l'une des faces de (a), cette couche externe contenant une combinaison de silice finement divisée et d'une huile de silicone, cette couche externe ayant une épaisseur inférieure à 0,8 $\mu$m.

2. La structure selon la revendication 1, dans laquelle ladite amine a la formule générale $R_3N$, l'un des groupes R étant un groupe alkyle en $C_{12}$-$C_{18}$, les autres étant des groupes hydroxyalkyle en $C_1$-$C_4$.

3. La structure selon la revendication 1 ou la revendication 2, dans laquelle ladite polyoléfine est un copolymère aléatoire du propylène et de l'éthylène ou un terpolymère du propylène, de l'éthylène et du butène-1.

4. La structure selon la revendication 3, dans laquelle ledit copolymère du propylène et de l'éthylène contient de 2 à 8% en poids d'éthylène.

5. La structure selon la revendication 3, dans laquelle ledit terpolymère du propylène, de l'éthylène et du butène-1 contient de 3 à 6% en poids d'éthylène et 4 à 5% en poids de butène-1.

6. La structure selon l'une quelconque des revendications précédentes, dans laquelle ladite silice a une granulométrie moyenne de 0,5 à 5 $\mu$m et est présente à raison de 0,05 à 0,5% en poids par rapport à ladite couche externe.

7. La structure selon l'une quelconque des revendications précédentes, dans laquelle ladite huile de silicone est un polydiméthylsiloxanne ayant une viscosité de 20 000 à 3 000 000 mm²/s et est présente en une quantité de 0,3 à 0,8% en poids par rapport à la couche externe.

8. La structure selon l'une quelconque des revendications précédentes, qui contient aussi un amide d'un acide monocarboxylique insoluble dans l'eau ayant de 8 à 24 atomes de carbone, l'amide étant présent dans la résine précurseur de ladite couche de base en une quantité de 300 à 400 ppm (300 à 400 x $10^{-6}$), et dans ladite couche externe en une quantité allant jusqu'à 2000 ppm (2000 x $10^{-6}$).

## Patentansprüche

1. Orientierte Mehrschichtenfilmstruktur, enthaltend coextrudierte Schichten aus

a) einer Grundschicht, die Polypropylen mit einer relativ hohen Stereoregularität und 0,05 bis 0,2 Gew.-%, bezogen auf die Basisschicht, eines $C_{12}$-bis $C_{18}$-aliphatischen tertiären Amins enthält, und

b) einer heißsiegelbaren Hautschicht, die ein Polyolefin mit einer relativ niedrigen Stereoregularität an mindestens einer Oberfläche der Grundschicht (a) enthält, wobei die Hautschicht eine Kombination aus feinzerteiltem Siliciumdioxid und einem Siliconöl sowie eine Dicke von weniger als 0,8 $\mu$m aufweist.

2. Struktur nach Anspruch 1, worin das Amin die allgemeine Formel $R_3N$ aufweist, in der einer der Reste R einen $C_{12}$-bis $C_{18}$-Alkylrest und die anderen Reste R Hydroxy-($C_1$-bis $C_4$)-alkylreste darstellen.

3. Struktur nach Anspruch 1 oder 2, worin das Polyolefin entweder ein statistisches Copolymer aus Propylen und Ethylen oder ein Terpolymer aus Propylen, Ethylen und Buten-1 darstellt.

4. Struktur nach Anspruch 3, worin das Copolymer aus Propylen und Ethylen 2 bis 8 Gew.-% Ethylen enthält.

5. Struktur nach Anspruch 3, worin das Terpolymer aus Propylen, Ethylen und Buten-1 3 bis 6 Gew.-% Ethylen und 4 bis 5 Gew.-% Buten-1 enthält.

6. Struktur nach einem der vorstehenden Ansprüche, worin das Siliciumdioxid eine mittlere Korngröße von 0,5 bis 5 $\mu$m aufweist und in einer Menge von 0,05 bis 0,5 Gew.-% der Hautschicht vorliegt.

7. Struktur nach einem der vorstehenden Ansprüche, worin das Siliconöl ein Polydimethylsiloxan mit einer Viskosität von 20000 bis 3000000 mm²/s ist und in einer Menge von 0,3 bis 0,8 Gew.-% der Hautschicht vorliegt.

8. Struktur nach einem der vorstehenden Ansprüche, die auch ein Amid einer in Wasser unlöslichen Monocarbonsäure mit 8 bis 24 Kohlenstoffatomen enthält, wobei das Amid in dem Vorläuferharz der genannten Grundschicht in einer Menge von 300 bis 400 ppm und in der genannten Hautschicht in einer Menge von bis zu 2000 ppm vorliegt.